# EUROPÄISCHE PATENTANMELDUNG

(11) **EP 3 971 278 A1**
(43) Veröffentlichungstag der Anmeldung: **23.03.2022**
(21) Anmeldenummer: 21197236.9
(22) Anmeldetag: 16.09.2021
(51) Int. Cl.: C12C 1/033, C12C 1/125, C12C 1/12, C12C 1/15

(54) **VORRICHTUNG ZUM KONTINUIERLICHEN MÄLZEN VON GETREIDEKÖRNERN**

(30) Priorität: 16.09.2020 AT 507882020
(71) Anmelder: Plohberger, Christian, 4710 Grieskirchen (AT)
(72) Erfinder: Plohberger, Christian, 4710 Grieskirchen (AT)
(74) Vertreter: Hübscher & Partner Patentanwälte GmbH

(57) **Zusammenfassung**

Es wird eine Vorrichtung zum kontinuierlichen Mälzen von Getreidekörnern, mit einer Darreinheit (1), die eine Austragsschnecke (13) und einen Gehäusemantel (9) umfasst, an den in einer Längsrichtung nach oben ein Gehäusedeckel (10) und nach unten ein über eine Drehhorde (8) verbundener Lufteinlasskanal (7) anschließt, beschrieben. Um eine Vorrichtung der eingangs geschilderten Art anzugeben, die trotz einfacher konstruktiver Bedingungen einen wartungsarmen und energieeffizienten Betrieb unter Vermeidung von Stillstandzeiten erlaubt und dabei eine gleichmäßige Abdarrung des Malzes ermöglicht, wird vorgeschlagen, dass im Bereich des Gehäusedeckels (10) eine Beschickungseinrichtung (4) zum kontinuierlichen Eintrag und im Übergangsbereich (12) zwischen Gehäusemantel (9) und Drehhorde (8) die Austragsschnecke (13) zum kontinuierlichen Austrag von Darrgut angeordnet ist.

## Beschreibung

Die Erfindung bezieht sich auf eine Vorrichtung zum kontinuierlichen Mälzen von Getreidekörnern, mit einer Darreinheit, die eine Austragsschnecke und einen Gehäusemantel umfasst, an den in einer Längsrichtung nach oben ein Gehäusedeckel und nach unten ein über eine Drehhorde verbundener Lufteinlasskanal anschließt.

Zum Mälzen von Getreidekörnern sind Vorrichtungen bekannt, die beispielsweise eine Weicheinheit zum Waschen, Einweichen und Abspülen der Körner, einen pneumatisch beaufschlagten Keimkasten zur Erzeugung von Grünmalz sowie eine Darreinheit zum Schwelken und Abdarren des Grünmalzes umfassen.

Aus dem Stand der Technik sind beispielsweise Darreinheiten bekannt (DE 2101848A1), die einen Gehäusemantel umfassen, an den in einer Längsrichtung nach unten ein über eine Drehhorde verbundener Lufteinlasskanal anschließt. Die Darreinheit kann über eine seitliche Gehäusemantelöffnung, die während des Darrprozesses verschlossen ist, durch eine Förderschnecke be- und entladen werden. Zum Abdarren wird das auf der Drehhorde aufliegende Darrgut über den Lufteinlasskanal mit beheizter Trocknungsluft beaufschlagt. Nachdem das gesamte Darrgut vollständig abgedarrt wurde, wird die Gehäusemantelöffnung freigegegeben und das Malz ausgetragen. Ein wesentlicher Nachteil besteht allerdings darin, dass Grünmalz nur chargenweise abgedarrt werden kann, wobei das abgedarrte Malz vollständig ausgetragen und wieder eine neue Grünmalzcharge eingetragen wird. Aufgrund der durch das Entleeren und Befüllen der Darreinheit bedingten Stillstandszeiten und der damit verbundenen Wärmeverluste zufolge eines Abkühlens des Gehäuseinnenraums, erfordern derartige Darreinheiten einen verhältnismäßig hohen Zeit- und Energieaufwand. Darüber hinaus lässt sich während des Darrprozesses nur eine unzureichende Durchmischung des Darrgutes erreichen, sodass das Darrgut ungleichmäßig abgedarrt wird. Dies kann einerseits zu Schimmelbildung in Darrgutbereichen mit zu hoher Restfeuchte und andererseits zu überrösteten Malzen sowie Verklebungen der Drehhordenschlitze führen, wobei Letzteres regelmäßig durchzuführende Reinigungsarbeiten zur Folge hat.

Es besteht somit ein Bedarf, eine Vorrichtung der eingangs geschilderten Art anzugeben, die trotz einfacher konstruktiver Bedingungen einen wartungsarmen und energieeffizienten Betrieb unter Vermeidung von Stillstandzeiten erlaubt und dabei eine gleichmäßige Abdarrung des Malzes ermöglicht.

Die Erfindung löst die gestellte Aufgabe dadurch, dass im Bereich des Gehäusedeckels eine Beschickungseinrichtung zum kontinuierlichen Eintrag und im Übergangsbereich zwischen Gehäusemantel und Drehhorde die Austragsschnecke zum kontinuierlichen Austrag von Darrgut angeordnet ist.

Der Erfindung liegt dabei die Überlegung zugrunde, dass immer die unterste, auf der Drehhorde aufliegende Darrgutschicht vollständig abdarren und kontinuierlich über eine vorzugsweise stationäre Austragsschnecke ausgetragen werden kann, wobei der restliche Darrguthaufen schwerkraftbedingt in Richtung der Drehhorde nachbewegt wird. Folglich wird insbesondere ein Überrösten der untersten Darrgutschicht sowie Verklebungen bzw. ein Verschluss der Drehhordendurchlässe vermieden. Die Temperatur der durch den Lufteinlasskanal über die Drehhorde in den Darrguthaufen eingeleitete und diesen durchströmende Trocknungsluft nimmt grundsätzlich von der untersten Darrgutschicht hin zur obersten Darrgutschicht ab, wohingegen die Wasserdampfsättigung der Trocknungsluft von unten nach oben zunimmt. Vor diesem Hintergrund hat das schwerkraftbedingte Nachbewegen des Darrguthaufens in Richtung Drehhorde den vorteilhaften Effekt, dass die nach unten nachrückenden Darrgutschichten im Zuge des Darrprozesses jeweils mit Trocknungsluftmassen beaufschlagt werden, deren Trocknungstemperatur in Richtung Drehhorde kontinuierlich zu- und deren Luftfeuchtegehalt kontinuierlich abnimmt. Dadurch lassen sich nicht nur Darrgutbereiche vermeiden die über einen längeren Zeitraum einer zu hohen Feuchtigkeit ausgesetzt wären, sondern es kann ein für das Malz besonders schonender Darrprozess vorgenommen werden, der sich insbesondere durch eine homogene Malzfarbe sowie durch eine verringerte Bildung von Dimethlysulfid-Präkursoren und Hydroxymethylfurfural auszeichnet. Um ein problemloses Austragen der untersten abgedarrten Darrgutschicht zu ermöglichen, ist vorzugsweise der im Übergangsberiech zwischen Gehäusemantel und Drehhorde in den Gehäuseinnenraum ragende Schneckenabschnitt der Austragsschnecke nach oben hin mit beispielsweise einem Abdeckblech abgedeckt. Im Bereich des Gehäusedeckels kann ein Luftauslasskanal zum Abführen der wasserdampfgesättigten Abluft anschließen. Zur Erhöhung der Energieeffizienz kann die Abluft in eine Wärmerückgewinnungseinrichtung geleitet werden, die beispielsweise einen Kreuzwärmetauscher oder ähnliches umfasst und / oder mit einer der Darreinheit nachgelagerten Malzabkühlkaskade verbunden ist. Die dadurch vorgewärmte Prozessluft kann somit wieder über den Lufteinlasskanal der Darreinheit zugeführt werden.

Um mit geringem konstruktiven Aufwand die Voraussetzungen für ein schichtweises Austragen und Auflockern des Darrgutes zu schaffen, wird vorgeschlagen, dass der Gehäusemantel mit einem Drehantrieb verbunden ist und über einen im Bereich der Drehhorde angeordneten Lagerring abgestützt ist. Der Lagerring ist dabei so ausgebildet, dass sich der über diesen abgestützte Gehäusemantel frei bezüglich seiner zur Längsrichtung parallelen Längsachse drehen kann, wohingegen der Lagerring ortsfest angeordnet ist. Die Austragsschnecke kann dabei den Lagerring durchsetzen und oberhalb der Drehhorde in den durch den Gehäusedeckel, die Drehhorde und den Gehäusemantel begrenzten Gehäuseinnenraum einmünden. Vorzugsweise ist der Antrieb der Austragsschnecke außerhalb des Gehäuseinnenraums angeordnet. Der Gehäusemantel kann mit einem gesonderten Drehantrieb oder aber auch mit dem Drehantrieb für die Drehhorde verbunden sein.

Grundsätzlich können die Drehrichtung und Drehgeschwindigkeit der Drehhorde und / oder des Gehäusemantels frei eingestellt werden.

Um das abgedarrte Malz schichtweise auszutragen, kann vom Gehäusemantel oberhalb der Austragsschnecke ein quer zur Längsrichtung verlaufender Darrgutmitnehmer in den Gehäuseinnenraum vorragen. Der Darrgutmitnehmer kann dabei als radial zur Längsachse nach innen verlaufende Blechplatte ausgeführt sein, deren Länge in etwa dem Radius des Gehäuseinnenraums und / oder der Länge des in den Gehäuseinnenraum ragenden Austragsschneckenabschnitts entsprechen. Durch die Abstützung des Darrgutmitnehmers am Gehäusemantel können die sich durch die Gewichtskraft des Darrgutes ergebenden Kräfte besonders gut abgeleitet werden, weil sich am Gehäusemantel im Gegensatz zu einer etwaigen entlang der Längsachse verlaufenden Mittelsäule konstruktiv günstigere Befestigungsbedingungen ergeben.

Um eine insbesondere durch die Gewichtskraft des Darrguthaufens bedingte Verdichtung des Darrgutes zu vermeiden, empfiehlt es sich, dass vom Gehäusemantel oberhalb der Austragsschnecke ein Lockerungswerkzeug in den Gehäuseinnenraum vorragt. Das Lockerungswerkzeug kann dabei einen Träger umfassen, der vom Gehäusemantel radial zur Längsachse in den Gehäuseinnenraum ragt und an dem mehrere quer vom Träger abstehende Lockerungsmesser vorgesehen sind. Diese Lockerungsmesser verlaufen bevorzugt in Längsrichtung, sodass durch die Lockerungsmesser der Transport des Darrgutes von der Seite des Gehäusedeckels in Richtung Drehhorde bzw. Austragsschnecke nicht behindert wird.

Für einen gleichmäßigen Darrvorgang ist eine gleichmäßige Höhe des Darrguthaufens im Gehäuseinnenraum wesentlich, sodass es sich empfiehlt, dass die Beschickungseinrichtung eine quer zur Längsrichtung verlaufende Verteilerschnecke umfasst, die in Längsrichtung verlagerbar ist. Auf diese Weise kann das eingetragene Darrgut nicht nur in radialer Richtung zur Längsachse verteilt, sondern durch entsprechende Verlagerung in Längsrichtung auch bereits eingetragenes Darrgut nivelliert werden. Die Verlagerung in Längsrichtung erlaubt in diesem Zusammenhang die Einstellung unterschiedlicher Höhen des Darrguthaufens, womit gemeinsam mit den übrigen Prozessparametern ein auf die jeweilige Getreideart gut abgestimmter Darrprozess ermöglicht wird.

Um einen gleichmäßigen Lufteintrag über die gesamte Drehhordenfläche zu ermöglichen und gleichzeitig etwaiges durch die Drehhorde hindurchgefallenes Darrgut gesammelt abführen zu können, wird vorgeschlagen, dass sich der Lufteinlasskanal zur Drehhorde hin konisch erweitert.

Damit eine zuverlässige Bildung von Grünmalz auf besonders energiesparende Weise ermöglicht wird, kann der Darreinheit in Förderrichtung des Darrgutes ein zwangsbelüftungsfreier Keimkasten vorgelagert sein. Dabei wird das feuchte Keimgut ausschließlich durch die anfallende Verdunstungskälte gekühlt, wobei sich bei entsprechender Ausgestaltung des Keimkastens unter Berücksichtigung guter Wärmeisolationseigenschaften ein für den Keimvorgang besonders günstiges Mikroklima in Hinblick auf eine gleichmäßige Temperatursowie Feuchtigkeitsverteilung im Keimkasteninnenraum ausbilden kann. Um eine Feuchtigkeitsübersättigung zu vermeiden, können entsprechende Luftauslässe vorgesehen sein.

Um trotz der fehlenden Zwangsbelüftung des Keimkastens verbesserte Kühlbedingungen für das Keimgut zu schaffen, wird vorgeschlagen, dass der Keimkasten wenigstens teilweise übereinander angeordnete Fördereinrichtungen aufweist, deren Förderbänder durchgehende Auflageflächen für das Keimgut bilden. Im Gegensatz zu aus dem Stand der Technik bekannten Kettenförderbändern, die zwar eine gute Luftdurchlässigkeit für die zwangsgeführten Luftströme, aber eine geringe Kontaktfläche mit dem Keimgut aufweisen, ergibt sich dadurch der Vorteil, dass die von benachbarten Fördereinrichtungen abgegebene Verdunstungskälte an die Förderbänder und über deren durchgehende Auflageflächen auf dem Weg einer Kontaktkühlung an das geförderte Keimgut abgegeben wird. Solche durchgehenden Auflageflächen können beispielsweise durch vollflächig gummierte oder überhaupt aus Kautschuk bestehende Förderbänder gebildet werden, die vorzugsweise eine Förderbanddicke von ca. 8 bis 10 cm aufweisen.

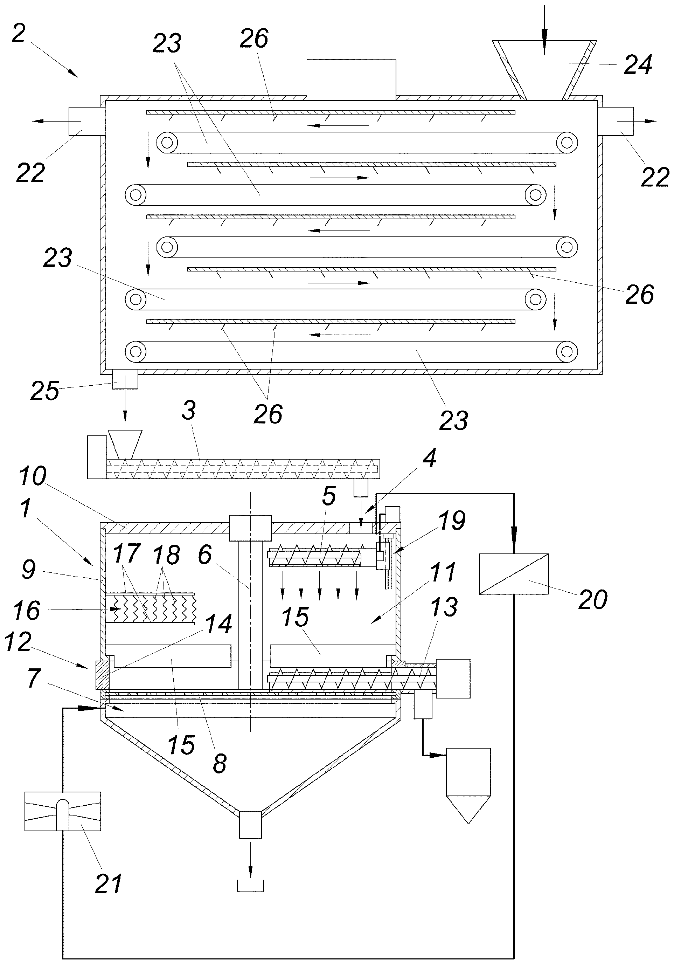

In der Zeichnung ist der Erfindungsgegenstand beispielsweise dargestellt. Es zeigen, und zwar in einem schematischen Blockschaltbild einer erfindungsgemäßen Vorrichtung.

Eine erfindungsgemäße Vorrichtung zum kontinuierlichen Mälzen von Getreidekörnern umfasst eine Darreinheit 1 und vorzugsweise eine der Darreinheit 1 in Förderrichtung des Darrgutes vorgelagerten Keimkasten 2. Zum kontinuierlichen Fördern des Darrgutes kann zwischen dem Keimkasten 2 und der Darreinheit 1 eine Transportschnecke 3 vorgesehen sein.

Die Darreinheit 1 wird dabei über eine Beschickungseinrichtung 4 kontinuierlich mit dem Darrgut befüllt, wobei die Beschickungseinrichtung 4 eine Verteilerschnecke 5 zum Verteilen des Darrgutes in radialer Richtung einer Längsachse 6 umfasst. Zum Darren des Darrgutes umfasst die Darreinheit einen Lufteinlasskanal 7, der über eine um die Längsachse 6 drehbare Drehhorde 8 mit dem Gehäusemantel 9 der Darreinheit 1 verbunden ist. Gemeinsam mit dem der Drehhorde 8 gegenüberliegenden Gehäusedeckel 10 bildet sich ein Gehäuseinnenraum 11. In diesen wird das Darrgut über die Beschickungseinrichtung 4 vom Gehäusedeckel 10 in Richtung Drehhorde 8 und die zum Darren über den Lufteinlasskanal 7 von der Drehhorde 8 im Gegenstrom in Richtung Gehäusedeckel 10 eingeblasene Luft gefördert. Zum Austragen des abgedarrten Darrgutes ist im Übergangsbereich 12 zwischen Gehäusemantel 9 und Drehhorde 8 eine Austragsschnecke 13 angeordnet.

In einer besonders bevorzugten Ausführungsform ist der Gehäusemantel 9 mit einem nicht näher dargestellten Drehantrieb verbunden und über einen im Bereich der Drehhorde 8, vorzugsweise im Übergangsbereich 12 zwischen Gehäusemantel 9 und Drehhorde 8 angeordneten Lagerring 14 um die Längsachse 6 drehbar abgestützt.

Zum schichtweisen Austragen des Darrgutes aus dem Gehäuseinnenraum 11 ragt vom Gehäusemantel 9 ein oberhalb der Austragsschnecke 13 quer zur Längsrichtung 6 verlaufender Darrgutmitnehmer in den Gehäuseinnenraum 11 vor. Durch diesen Darrgutmitnehmer, der beispielsweise quer zur Längsrichtung verlaufende Blechplatten 15 umfassen kann, wird bei einer Umdrehung des Gehäusemantels 9 die unterste Schicht des Darrgutes zur Austragsschnecke 13 und über diese aus der Darreinheit 1 gefördert.

Darüber hinaus kann vom Gehäusemantel 9 ein Lockerungswerkzeug 16 in den Gehäuseinnenraum 11 vorragen, das beispielsweise quer zur Längsachse 6 verlaufende Träger 17 und im Wesentlichen in Richtung der Längsachse verlaufende Lockerungsmesser 18 umfasst.

Zur Einstellung der Höhe des Darrguthaufens im Gehäuseinnenraum 11 kann die Verteilerschnecke 5 der Beschickungseinrichtung 4 über einen Stelltrieb 19 in Richtung der Längsachse verlagert werden.

Der zum Darren benötigte Luftstrom wird gegen die Förderrichtung des Darrgutes über den vorzugsweise konisch sich hin zur Drehhorde 8 erweiternden Lufteinlasskanal 7 in den Gehäuseinnenraum 11 eingeblasen und über einen nur schematisch dargestellten Luftauslass einer Wärmerückgewinnungseinrichtung 20 zugeführt, ehe er über ein Gebläse 21 wieder dem Lufteinlasskanal 7 zugeführt wird.

Der der Darreinheit 1 vorgelagerte Keimkasten 2 kann zwangsbelüftungsfrei ausgeführt sein und lediglich Luftauslässe 22 zum passiven Abführen überschüssiger Feuchtluft aufweisen.

Innerhalb des Keimkastens 2 können übereinander angeordnete Förderbänder 23 vorgesehen sein, die durchgehende Auflageflächen für das von einer Keimgutaufgabe 24 zu einem Keimgutauslass 25 geförderte Keimgut ausbilden. Um innerhalb des Keimkastens 2 die Schichtdicke des Keimgutes einstellen zu können, können oberhalb der Förderbänder 23 Keimgutpflüge 26 vorgesehen sein. Darüber hinaus kann die schichtdicke des Keimgutes im Keimkasten 2 auch über unterschiedliche Fördergeschwindigkeiten der Förderbänder 23 vorgegeben werden.

## Patentansprüche

1. Vorrichtung zum kontinuierlichen Mälzen von Getreidekörnern, mit einer Darreinheit (1), die eine Austragsschnecke (13) und einen Gehäusemantel (9) umfasst, an den in einer Längsrichtung nach oben ein Gehäusedeckel (10) und nach unten ein über eine Drehhorde (8) verbundener Lufteinlasskanal (7) anschließt, **dadurch gekennzeichnet, dass** im Bereich des Gehäusedeckels (10) eine Beschickungseinrichtung (4) zum kontinuierlichen Eintrag und im Übergangsbereich (12) zwischen Gehäusemantel (9) und Drehhorde (8) die Austragsschnecke (13) zum kontinuierlichen Austrag von Darrgut angeordnet ist.

2. Vorrichtung nach Anspruch 1, **dadurch gekennzeichnet, dass** der Gehäusemantel (9) mit einem Drehantrieb verbunden ist und über einen im Bereich der Drehhorde (8) angeordneten Lagerring (14) abgestützt ist.

3. Vorrichtung nach Anspruch 1 oder 2, dass vom Gehäusemantel (9) oberhalb der Austragsschnecke (13) ein quer zur Längsrichtung verlaufender Darrgutmitnehmer in den Gehäuseinnenraum (11) vorragt.

4. Vorrichtung nach einem der Ansprüche 1 bis 3, **dadurch gekennzeichnet, dass** vom Gehäusemantel (9) oberhalb der Austragsschnecke (13) ein Lockerungswerkzeug (16) in den Gehäuseinnenraum (11) vorragt.

5. Vorrichtung nach einem der Ansprüche 1 bis 4, **dadurch gekennzeichnet, dass** die Beschickungseinrichtung (4) eine quer zur Längsrichtung verlaufende Verteilerschnecke (5) umfasst, die in Längsrichtung verlagerbar ist.

6. Vorrichtung nach einem der Ansprüche 1 bis 5, **dadurch gekennzeichnet, dass** sich der Lufteinlasskanal (7) zur Drehhorde (8) hin konisch erweitert.

7. Vorrichtung nach einem der Ansprüche 1 bis 6, **dadurch gekennzeichnet, dass** der Darreinheit (1) in Förderrichtung des Darrgutes ein zwangsbelüftungsfreier Keimkasten (2) vorgelagert ist.

8. Vorrichtung nach Anspruch 7, **dadurch gekennzeichnet, dass** der Keimkasten (2) wenigstens teilweise übereinander angeordnete Fördereinrichtungen aufweist, deren Förderbänder (23) durchgehende Auflageflächen für das Keimgut ausbilden.
